# EUROPEAN PATENT APPLICATION

(11) **EP 2 112 854 A1**
(43) Date of publication of application: **28.10.2009**
(21) Application number: 08425286.5
(22) Date of filing: 24.04.2008
(51) Int. Cl.: H04W 72/04

(54) **Access control method for cellular networks comprising femto-cells**

(71) Applicant: Nokia Siemens Networks S.p.A., 20126 Milano (IT); Nokia Siemens Networks OY, 02610 Espoo (FI)
(72) Inventor: Pieroth, Mathias, 82205 Gilching (DE); Marnoni, Luca, 21047 Saronno (VA) (IT); De Benedittis, Rosella, 20137 Milano (IT)
(74) Representative: Kley, Hansjörg

(57) **Abstract**

Access of a user terminal (UE) to a cell (C) in a cellular communication network candidate for access by the user terminal (UE) is controlled by broadcasting (200) within the cell (C) at least one signal (for instance a flag) for reception by the user terminal (UE), selected out of:
- a) a start signal (LU_Start; CellRegistrazion_Start) which, if the location area code or LAC broadcast by the cell (C) or the cell (C), respectively, are not included in a list of forbidden code or cells, indicates to the user terminal (UE) to start immediately a procedure (202) for location update or registration with said cell (C), respectively;
- b) a reset signal (LAC_Forbidden-Reset; CellForbiddenList_Reset) which, if the location area code broadcast by the cell or the cell (C), respectively, are included in said list of forbidden codes or cells, indicates to the user terminal (UE) to remove the code or the cell (C), respectively, from the list and to start immediately a procedure (202) for location update or registration with said cell, respectively; and
- c) the combination of the signals under a) and b).

Preferred application to femto-cell networks (Figure 1).

## Description

### Field of the invention

This disclosure refers to access control techniques for cellular communication networks.
This disclosure was developed with special attention paid to its possible use in communication networks of the so-called femto-cell type.

### Description of the related art

Current cellular communication networks (such as UMTS networks) are made up of macro-cells (for instance UTRAN cells) mainly intended to ensure outdoor radio coverage. For each macro-cell, parameters such as transceiver location, transmission power, location area, capacity and so on are controlled and configured by the Mobile Network Operator (MNO).

To improve indoor coverage and offer new business opportunities to mobile operators, a new application has been recently submitted to standardization bodies such as 3GPP (3rd Generation Partnership Project).

Such application, sometimes referred to as HomeNodeB, aims at bringing 3G radio coverage directly within the premises of the user/client by using home transceiver stations, thus giving rise to so-called femto-cells equipped by corresponding Femto Access Points or FAPs. These stations will be assigned to the end users and directly installed in their home environment.

It is expected that FAPs will be connected to the transport network via a DSL router (for instance a DSL WAN router) thus offering both mobile and fixed network services. Specifically, it is expected that, as long as located outside the home environment, the user will receive services from the mobile network via macrocells and, when in his home environment, he will receive the same, or better, services via his own FAP. It is also expected that, with home transceiver stations directly connected to the fixed network, services rendered via femto-cells may be offered by operators at lower fees compared to services based on the use of macrocells.

As both femtocells and macrocells use the same radio access technology, existing mobile phones (namely "legacy" phones) originally intended for macrocell coverage should also be able to support services via femto-cells.

In this prospected scenario, it is expected that the number of FAPs deployed will be extremely high (one per family, if not more) and totally out of control of the mobile operator. Each user will be able to directly purchase and install his own FAP, thus making it practically impossible for a Mobile Network Operator to handle femto-cells under controlled radio planning. Each FAP will be highly likely to be able to derive its radio parameter configuration from its own radio measurements and/or measurements reported by the user equipments (UEs) "camped" thereon.

Each FAP should principally coincide with a different Location Area, identifying the FAP owner premises. Yet, due to the limited number of Location Area Codes (LACs) available, different FAPs will be highly likely to be assigned the same LAC, thus making it impossible for the camped UEs to recognize their "home zone" by using the LAC of the corresponding femto-cell.

It is also expected that the owner (or assignee) of the FAP will be able to decide whether or not to (temporarily) grant access to his FAP to a certain number of other users, thus performing - with respect to the user terminals thus authorised - the function currently referred to as Closed Access Control.

Access control mechanisms currently available for cellular networks (for instance UTRAN) are designed to grant access rights at the network level, namely at the level of location area. Thus, existing mechanisms are not adapted for use in permitting decisions related to access control at the femto-cell level.

More specifically, registration procedures for mobile systems (UTRAN or GERAN) as described for instance in the 3GPP TS 24.009 standard, provide that a User Equipment shall perform a Location Updating or Routing Area Updating procedure only in the case it enters a new location area or a new routing area, respectively, or when a time interval for periodical update lapses. This time interval is defined by the network and is generally set to a value large enough to avoid congestion in the Core Network and in the Access Network as may derive from an intensive signal exchange.

Specifically, the standard in question does not foresee any means which may allow the network to know at each time where a given user terminal is camping, and thus avoid the risk of giving rise to signal congestion.

The inventors have noted that the solution provided for in the standard could, at least notionally, be improved by fore-seeing a set of operations permitting user equipments in Connected Mode to perform a Cell Update or Routing Area Update upon cell re-selection, if the new cell belongs to the same location area as the old one. This mode of operation might be used by the femto system to identify when a user terminal enters a femto-cell coming from another femto-cell with the same LAC. At this point, when receiving the update message (for the cell or the routing area), the femto system might use the U-RNTI (UTRAN Radio Network Temporary Identifier) to determine whether the user equipment comes from another femto-cell and, in the positive, set the timer T3212 controlling the periodic location updating procedure (which is currently 6 minutes) to the minimum value, by broadcasting this adapted value in the SIB1 (System Information Block 1) field on the BCCH (Broadcast Control CHannel). All this while waiting for the user equipment just entered to trigger its periodic location updating procedure, thus enabling the procedure to be performed as usual, while the concentration/control element for the femto-cells, FGW (Femto Gateway) will learn the new cell location of the user equipment. Then the timer T3212 may be re-set to the old value (selected by the operator) to be distributed then over the BCCH channel.

Such a mechanism would allow to learn the cell locations for all user equipments which move from one femto-cell to another without leaving the connected mode. By using the URA_PCH state, this will cover the majority of all possible cases.

This with the advantage given by the fact that such a mechanism will work without substantial modifications in the current standard.

In any case, such a solution would also exhibit various drawbacks.

In the first place, it will not permit to guarantee that the femto system may know at each time the cell locations of all user equipments camping in its area. This is because the mechanism as described will be unable to track those user terminals entering the femto-cell while in the Idle Mode, and also taking into account the fact that up to 6 minutes might be necessary for the user terminal to trigger its periodic location update. For that reason, it would not be possible to distribute paging messages from the Core Network to individual femto-cells without running the risk that paging may not be received by the user equipment addressed thereby.

Also, such a solution would require further efforts at the implementation level in the femto system and further, without coordination between FAPs (which is not available), cell and routing updates would be rejected by the new Femto Access Point due to integrity protection data being missing.

Also, user equipments already registered in a femto-cell will be triggered to repeat their registration, thus increasing the signalling load.

The earlier European Patent application No. 08001434.3 (included in the prior art only under Art. 54.3 of the European Patent Convention) proposes to solve the problem of controlling access to a femto-cell by resorting to a "black list", namely a Forbidden Cell List.

This solution shows certain advantages, but does not tackle some relevant problems related to the limited number of LAC codes.

Specifically, even when adopting such an improved solution, it may still be possible for a user equipment to camp in a "forbidden" cell without knowing this until it performs its periodic location update. During this time period, the femto system will forward paging messages on to all femto-cells having the same LAC (for instance LAC1). This would involve a waste in processing capability while the user equipment would not be urged to select a more suited cell from which it can be served.

By way of example, if a femto system is composed of 20,000 femto-cells with a limited number of LAC codes (for instance 10), it may happen that the same paging message is broadcast to 20,000/10 = 2,000 femto-cells in order to ensure that the user equipment being paged is reached, when this is actually camping under one single femto-cell.

Also, in a femto system, it is possible that after a femto-cell switches off/switches on, the same femto-cell may be assigned a different LAC code (for instance LAC2). As a consequence, it may happen that a user equipment may not select its home cell for camping if by chance it previously had a registration rejection from a femto-cell previously visited which used the same LAC (for instance LAC2) now used by its home cell.

Finally, especially in those femto applications where cells are intended to provide a home coverage for a restricted number of users, it may be very useful to know whether there are user equipments camping in the cell. In case no user equipment is currently camping, the femto-cell may switch off transmission of broadcast services (for instance Multimedia Broadcast Multicast Service or MBMS services), and also reduce its broadcast channel power, thus achieving savings in terms of consumption and reducing the risk that the cell may be selected by non-authorised (for instance outdoor) users, with the side benefits of limiting interference towards neighbouring cells.

### Object and summary of the invention

The invention has the object of further improving the known solutions discussed in the foregoing, by avoiding the drawbacks outlined above and achieving the effects sought in the terms of increasing the capability and operating flexibility of a femto system.

According to the invention, such an object is achieved by means of a method having the features set forth in the claims that follow.

The invention also relates to a corresponding network, a corresponding user terminal as well as a related computer program product, loadable in the memory of at least one computer and including software code portions for performing the steps of the method of the invention when the product is run on a computer. As used herein, reference to such a computer program product is intended to be equivalent to reference to a computer-readable medium containing instructions for controlling a computer system to coordinate the performance of the method of the invention. Reference to "at least one computer" is evidently intended to highlight the possibility for the present invention to be implemented in a distributed/modular fashion.

The claims are an integral part of the technical disclosure of the invention provided herein.

In an embodiment, in order to control access of user terminals to a femto system, Non Access Stratum (NAS) Mobility Management (MM) messages are used.

In an embodiment, in order to control access of user terminals to a femto system, Access Stratum (AS) Radio Resource Control (RRC) messages are used.

### Brief description of the annexed drawings

The invention will now be described, by way of example only, with reference to the annexed figures of drawing wherein:
- figure 1 is generically representative of the context of use of the invention described herein,
- figure 2 is a first flow chart representative of operation of the arrangement described herein,
- figures 3 to 5 illustrate the nature of various flags which may be used within the context of the arrangement described herein,
- figure 6 is a further flow chart which develops in greater detail the flow chart of figure 2 with reference to an embodiment of the arrangement described herein, and
- figures 7 to 9 illustrate further features of flags adapted to be used within the framework of the arrangement described herein.

### Detailed description of exemplary embodiments

In the following description, numerous specific details are given to provide a thorough understanding of embodiments. The embodiments can be practiced without one or more of the specific details, or with other methods, components, materials, etc. In other instances, well-known structures, materials, or operations are not shown or described in detail to avoid obscuring aspects of the embodiments.

Reference throughout this specification to "one embodiment" or "an embodiment" means that a particular feature, structure, or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

The headings provided herein are for convenience only and do not interpret the scope or meaning of the embodiments.

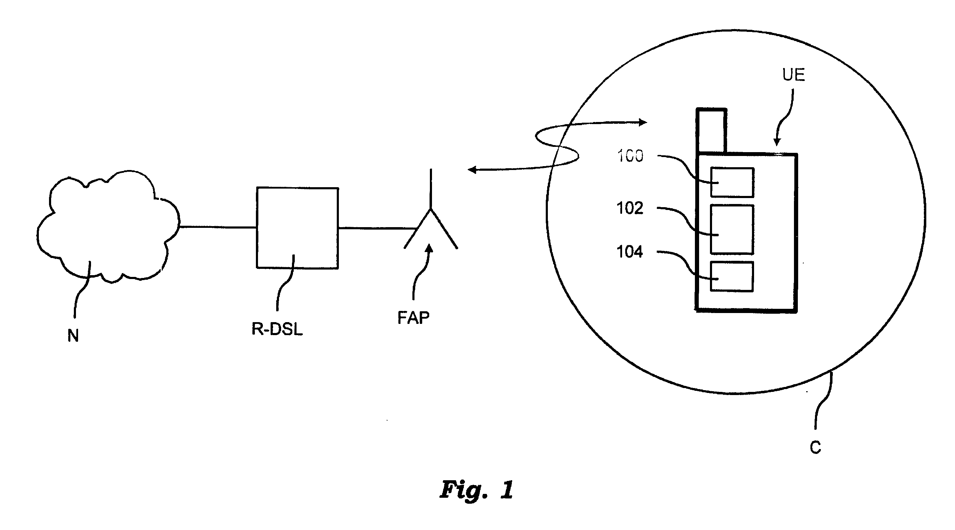

Figure 1 generally illustrates a User Equipment UE of an end user connected via a radio interface (for instance according to 3G communication facilities or other facilities known to that effect) with a so-called Femto Access Point or FAP, namely an access point adapted to provide radio coverage in (at least) one femto-cell within the end user premises.

The FAP (which constitutes the home transceiver serving the user) may be connected, for instance, to a fixed communication/transport network N (WAN, Wide Area Network) via a DSL router indicated R-DSL.

Within the user terminal UE, the general availability of a processor 100 and a memory 102 is highlighted. The user terminal may thus memorize one or more lists of LAC codes and/or cells that are considered forbidden (Forbidden Cell List) or authorised (White Cell List), respectively.

The reference 104 indicates in a schematic way the availability, within the user terminal, of an identifier which may be constituted, for instance, by the identifier known as IMSI (International Mobile Subscriber Identity).

Those of skill in the art will appreciate that, in general terms, the arrangement illustrated in figure 1 is of a conventional type, thus making it unnecessary to provide a more detailed description herein. In fact, one of the advantages of the arrangement described therein lies properly in that it does not require, for proper embodiment thereof, appreciable changes in femto-cells network structures and configurations already available in the art.

In the following, six different possible embodiments of the arrangement described herein will be considered.

The first three embodiments provide, in order to control access of a user terminal UE to a femto system, that the Non Access Stratum (NAS) Mobility Management (MM) function is used.

The three other embodiments conversely contemplate using, for the same purpose, Access Stratum (AS) Radio Resource Control (RRC) messages.

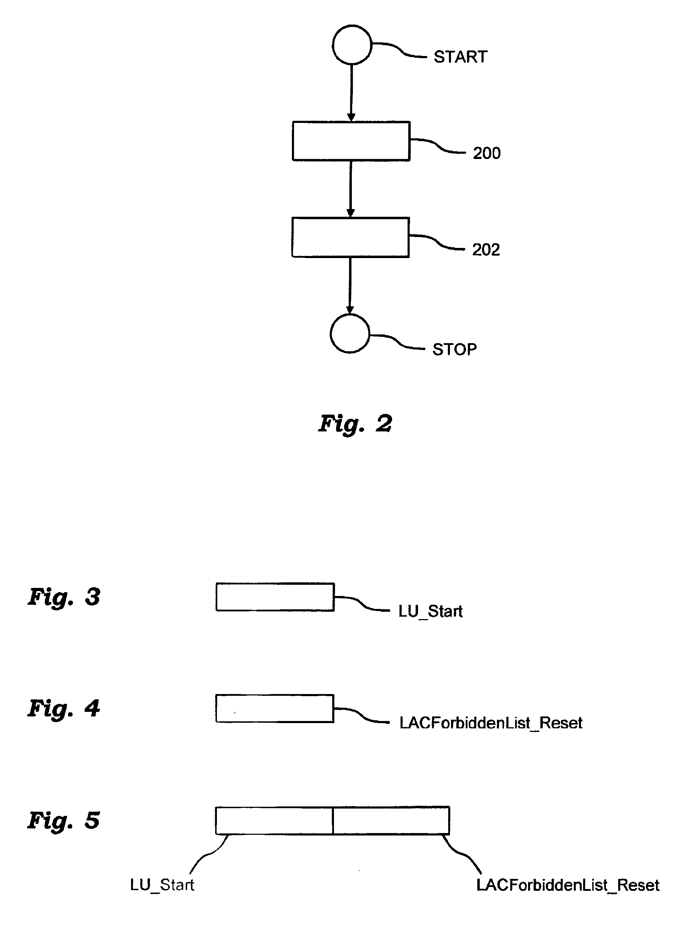

All the various embodiments described herein generally refer to the flowchart of figure 2, which includes two phases 200 and 202 between START and a STOP steps.

As better detailed in the following, the first phase 200 involves broadcasting, within the cell C to which the access control action refers, one or more flags as set forth in figures 3 to 5 and 7 to 9. The phase 200 is followed by a phase devoted to access control proper (phase 200) which may lead to camping of the user terminal UE within the cell C in question being either accepted or rejected. By considering first those embodiments based on the use of NAS - MM messages, in a first embodiment, in the step 200, the femto-cell C broadcasts, in a system information message (for instance System Information Block, SIB Type 1), a flag - here designated "LU_Start" (see figure 3) - that conveys a start indication. This may be, for instance, a flag in the information element (IE) designated "CS domain specific system information" which exploits one or more bits out of those currently available. The flag in question (represented as LU_Start in figure 3) indicates to the user terminal UE that, if the cell C is regarded as adapted for camping, namely is well received by the terminal UE, and the LAC code broadcast is not included in the LAC forbidden list stored in 102, the user terminal has a way to activate immediately (phase 202) its Location Updating (LU) procedure. This irrespective of whether it already registered with this LAC and the time for periodic repetition of the update procedure has not expired yet.

This embodiment involves various advantages, first of all the fact that enabling the LU_Start flag in the cells of a femto system, it is always possible to know where the user equipment is camping, IE under which femto-cell. This permits saving a quantity of paging traffic, since paging messages are forwarded only to the femto-cell involved, which is known, instead of being forwarded to all the cells having the same LAC.

Additionally, the user equipment can be immediately urged to select a more suitable cell to camp, in case it has no access rights to this femto-cell.

The femto system knows whether authorised users are camping or not in a femto-cell, so that it may decide to switch off certain channels and/or reduce its transmitted power.

In a second embodiment, the flag broadcast by the femto-cell C (for instance according to the same criteria already described in the foregoing) is a reset flag "LACForbid-denList_Reset" (see figure 4). This flag indicates to the user terminal UE that, if the cell is regarded as suitable for camping, i.e.it is well received by the user terminal, the same user terminal has a way to remove the LAC being broadcast from the LAC Forbidden List - in case the LAC in question is included in such a list. Also, the user terminal has a way to start immediately a location update procedure if the user terminal is not registered under this LAC.

The user equipment that receives this cell as the best one will immediately consider it as a valid candidate, irrespective of whether its LAC has been previously recorded as forbidden, and immediately initiates the Location Updating procedure if not registered under this LAC.

This embodiment has the advantage that enabling the LACFor-biddenList_Reset flag in a femto-cell which has just restarted its activity after being switched off by using a new LAC (for instance LAC2) with respect to the one used previously (for instance LAC1), makes it possible for the user equipment to still camp under its home FAP even if it got a registration rejection from a FAP previously visited which used this same new LAC (for instance LAC2).

In a third embodiment, the femto-cell broadcasts - for instance by resorting to the same criteria described in the foregoing, in this case by using at least two of the bits that are currently left available in the information element CS Domain Specific System - both the start and reset flags considered in the foregoing (see figure 5). In this way it indicates to the user terminal that, if the cell is regarded as suitable for camping, namely when it is well received, it may remove the LAC being broadcast from the "LACForbid-denList" (in case it is included in such a list) and start immediately its location update procedure.

In the step 202, the user terminal receiving such a cell as the best one will immediately consider it as a valid candidate, irrespective of whether its LAC is recorded as forbidden or not and immediately start the location update procedure irrespective of whether it has already registered under this LAC and the period for repeating the update has not be expired yet.

This embodiment groups the advantages of the two embodiments considered in the foregoing.

Specifically, enabling the "LU_Start" flag in the cells of a femto-system makes it is possible to know where a certain user equipment is camping, that is under which femto-cell it is camping, which saves a quantity of paging traffic.

In addition to this, the user equipment is immediately urged to select a more suited cell to camp in case it has no access rights to a given femto-cell.

The femto system is in a position to know whether authorised users are camping or not in a femto-cell, so that it may decide to switch off some channels and/or reduce its transmitted power.

Additionally, enabling the "LACForbiddenList_Reset" in a femto-cell which has just restarted its activity after been switched off using a new LAC (for instance LAC2) with respect to the one previously used (for instance LAC1) makes it possible for the user terminal to still camp under its own FAP even if it got a registration rejected from a FAP visited using this same new LAC (for instance LAC2).

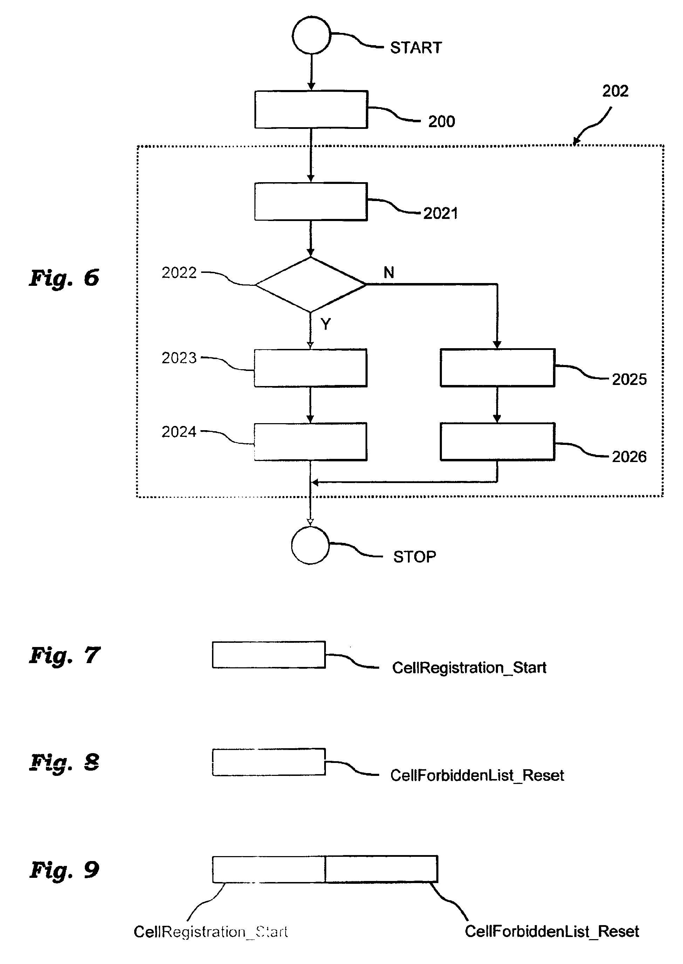

Passing now to those embodiments that provide for using AS-RRC messages, one considers the case where the user terminal UE has stored in the memory area 102 a list of cells where it is authorised to camp (namely a so-called "White Cell List") or a "black list" of cells where it is not authorised to camp, namely a "Forbidden Cell List", for instance as described in European patent application 08001434.3 already cited in the introductory portion of the instant description. In this case, according to a fourth embodiment of the arrangement described herein, in the phase 200, the femto-cell C broadcasts (once again for instance by adopting the criteria described in the foregoing) a start flag ("CellRegistra-tion_Start" (see figure 7) such as to indicate to the user terminal UE that, if the cell in question is regarded as suitable for camping, namely it is well received by the terminal UE and is not included in the list of forbidden cells, it may immediately start in the phase 202 a cell registration procedure with the cell.

This procedure, designated "Cell Registration" is illustrated in greater details in the lower portion of figure 6. One has to do with a procedure based on a certain number of messages being exchanged between the user terminal UE and the cell selected.

In a step 2021, the user terminal UE sends to the cell C an RRC message designated "Cell Registration Request", thus requesting a registration with the cell, including its identifier (for instance the IMSI 104) and, possibly, the results of radiometric measurements (RRC) performed on the cell.

In a step 2022, the cell C checks whether the user terminal in question (namely its IMSI) has an access right to camp in the cell.

If the test of step 2022 yields a positive outcome, in a step 2023 the cell sends to the user terminal an RRC message confirming registration ("Cell Registration Confirm") and, in a step 2024, once the confirmation message is received, the user terminal UE camps in the cell C by adding the identifier of the cell in question to its "white list" as stored in the memory area 102.

If the test of the step 2022 yields a negative outcome, in a step 2025 the cell sends to the user terminal an RRC message refusing registration ("Cell Registration Reject"). At this point, once the refusal message is received, in a step 2026 the user terminal UE adds the identifier of this cell to the list of forbidden cells (Forbidden Cell List) and tries to camp in another cell.

This embodiment provides the advantage due to the fact that, by enabling the "CellRegistration_Start" flag in the cells of a femto system, it is always possible to know where a given user terminal UE is camping, that is in which femto cell it is located. This permits to save a quantity of paging traffic, since the paging messages are forwarded only to the femto-cell concerned, which is known, instead of being forwarded to all the cells having the same LAC.

It is also possible to ensure that, in the case it has no access rights to this femto-cell, the user equipment UE is urged to immediately select a more suitable cell to camp.

The femto system knows whether authorised users are camping or not in a femto-cell, so that it can decide to switch off some channels and/or reduce its transmitted power.

In a fifth embodiment, the broadcast flag, for instance always according to the same criteria described in the foregoing, is a reset flag "CellForbiddenList_Reset" (see figure 8) such as to indicate to the user terminal UE the fact that, if the cell is regarded as suitable for camping, i.e.it is well received by the user terminal, the user terminal has a way to remove it from the list of forbidden cells ("Forbidden Cell List") stored in the memory area 102.

At this point, the user terminal may start, in the step 202, the registration procedure with the cell C as detailed in the foregoing (steps 2021 to 2026) in view of camping in the cell C.

All this without forcing the owner of the user equipment to switch off/switch on its terminal to reset the lists stored in the area 102 (which may have stored there also other lists such as the list of the forbidden LACs that are not intended to be reset).

This is the main advantage of the fact of enabling the "Cell-ForbiddenList_Reset" flag in a femto-cell that has just changed its access control policy.

In a sixth embodiment, to which figure 9 refers, the femto-cell C broadcasts (once again according to the same criteria described in the foregoing, for instance by using two of the bits currently left available in the information element "CS Domain Specific System Information") both flags "CellRegis-tration_Start" and "CellForbiddenList_Reset".

This in such a way as to indicate to the user terminal UE that, if the cell is regarded as suitable for camping, i.e. it is well received from the user terminal, the terminal UE shall remove it from the list of forbidden cells (if included in such a list) and to start immediately a "Cell Registration" procedure including the steps 2021 to 2026 described in the foregoing with reference to the fourth embodiment of the arrangement described herein.

This sixth embodiment groups in itself the advantages of the fourth and fifth embodiments discussed in the foregoing.

Specifically, by enabling the "CellRegistration_Start" in the cells of a femto system, it is always possible to know where a given user terminal UE is camping, i.e. in what femto-cell, thus saving a quantity of paging traffic since the paging messages are forwarded only towards the femto-cell involved, which is known, rather than forwarded to all those cells with the same LAC. Also, it is possible to ensure that, in case it has no access rights to this femto-cell, the user equipment is immediately urged to select a more suited cell to camp. The femto system knows whether authorised users are camping or not in a femto-cell, so that it can decide to switch off some channels and/or reduce the transmitted power.

Enabling the "CellForbiddenList_Reset" flag in a femto-cell which has just changed its access control policy makes it possible for a user terminal which was previously rejected by that cell to still try to camp in it, without forcing the owner of the user terminal to switch off/switch on its mobile terminal for resetting the lists stored in the memory 102 with a process likely to involve also other lists (for instance the list of forbidden LACs), which are not desired to be reset.

From the view point of implementation, the user terminal UE is configured in such a way to be able to process the new flags/fields transmitted by a cell within the framework of the System Information so that to be able to proceed in the step 202:
- by starting immediately a location update procedure (for instance if the flag "LU_Start" broadcast in the cell is enabled and if the user terminal is allowed to camp in this cell, i.e. if the cell's LAC is not forbidden); and/or
- by removing the LAC of this cell from the LAC forbidden list (if included), if the "LAC_Reset" flag broadcast in the cell is enabled thus considering the cell as a valid candidate for camping.

In greater detail, as regards the NAS-type embodiments (i.e. those embodiments using the NAS-MM messages) a possible embodiment provides for two bits being assigned in the information element IE "CS Domain Specific System Information" of the System Information Type 1 in order to represent the flags "LU_Start" and "LACForbiddenList_Reset", respectively.

In a consistent manner, an additional condition is inserted in the detailed description of the behaviour of the mobile station in the MM IDLE state to activate the start of the location update procedure on the basis of the value of the "LU_Start" flag as received by the cell (TS24.008-4.2.2 Detailed description of the MS behaviour in MM IDLE state).

Analogously, the meaning of the two flags included in the information element "CS Domain Specific System Information" (TS24.008.4.1.1.3 Core Network System Information for MM (UMTS only)) is described, while also describing the coding of the two new flags (TS24.008 10.5.1.12.2 CS "Domain Specific System Information").

Conversely, as regards those solutions based on AS-RRC messages, a possible implementation involves:
- assigning two bits in the information element "CS Domain Specific System Information" of the System Information Type 1 so as to represent the start flag "CellRegistra-tion_Start" and reset flag "CellForbiddenList_Reset" respectively,
- describing the meaning of the two flags in the information element "CS Domain Specific System Information" (TS24.008 4.1.1.3 Core Network System Information for MM (UMTS only)), and
- describing the encoding of the two new flags (TS42.008 10.5.1.12.2 CS "Domain Specific System Information").
As regards implementation at the TS25.331 level, a pos-sibile solution involves defining the new RRC "Cell Registration" procedure as described in the foregoing, specifically as regards describing the three new messages "Cell Registration Request", "Cell Registration Confirm" and "Cell Registration Reject" described in the foregoing.

The main advantages to be achieved by means of the arrangement described herein can be summarized as follows.

A femto system is proposed which forwards paging messages only towards the cell where the user terminal being paged is camping. This thanks to the fact that it is possible to know when the user terminal has entered a new cell. This also leads to saving a quantity of processing capability at the radio network level in the femto-cell in that the paging traffic is dramatically reduced.

The user terminal will not camp in a cell where it can have only limited access, as it will be immediately urged to select a more suitable cell to stay in.

In the case a femto-cell resumes its activity after being switched off with a LAC code which is new with respect to the one used previously, the femto-cell user can still be able to camp in its femto-cell even if it was previously rejected by a visited cell having the same LAC code.

The fact that the arrangement described herein is actually used can be easily spotted by detecting the broadcast transmission of the new flags by a 3GPP cell.

Of course, without prejudice to the underlying principles of the invention, the details and embodiments may vary, even significantly, with respect to what has been described herein by way of a non-limiting example only, without departing from the scope of the invention as defined by the annexed claims.

## Claims

1. A method of controlling access of a user terminal (UE) to a cell (C) in a cellular communication network candidate for access by said user terminal (UE), the method including broadcasting (200) in the cell (C) at least one signal for reception by said user terminal (UE), said signal being selected out of:
- a) a start signal (LU_Start; CellRegistration_Start) which, if the Location Area Code or LAC broadcast by the cell (C) or the cell (C), respectively, are not included in a list of forbidden codes or cells, indicates to the user terminal (UE) to start immediately a procedure (202) for location update or registration with the cell (C), respectively;
- b) a reset signal (LAC_Forbidden-Reset; CellForbid-denList_Reset) which, if said Location Area Code broadcast by the cell or the cell (C), respectively, are included in said list of forbidden codes or cells, indicates to the user terminal (UE) to remove said Location Area Code broadcast by the cell or said cell (C), respectively, from said list and to start immediately a procedure (202) for location update or registration with said cell, respectively; and
- c) the combination of the signals under a) and b).

2. The method of claim 1, wherein said at least one signal is broadcast as a flag.

3. The method of claim 1 or claim 2, wherein said signal is broadcast as broadcast system information, for instance SIB Type 1.

4. The method of any of the previous claims, wherein said signal is broadcast by using at least one bit available in the information element designated CS Domain Specific System Information.

5. The method of any of the previous claims, wherein said start signal (LU_Start), said reset signal (LACForbid-denList_Reset) or said combination thereof is a Non Access Stratum - Mobility Management or NAS-MM signal indicating to said user terminal (UE) to start a location update procedure (202).

6. The method of any of the previous claims, wherein said start signal (CellRegistration_Start), said reset signal (CellForbiddenList_Reset) or combination thereof is an Access Stratum - Radio Resource Control or AS-RRC signal indicating to said user terminal (UE) to start a registration procedure with said cell.

7. The method of any of the previous claims, wherein said cell (C) is a femto-cell in a communication network.

8. A cellular communication network configured for implementing the method of any of claims 1 to 7.

9. The communication network of claim 8, wherein said network is a femto-cell network.

10. A user terminal (UE) for use in a communication network according to claim 8 or claim 9, said user terminal (UE) configured for:
- immediately starting said location update procedure (202) upon reception of said start signal (LU_Start), irrespective of whether already registered with said Location Area Code or LAC and/or a predetermined period for performing said update procedure having lapsed, if the Location Area Code or LAC of the cell broadcasting said start signal is not among the forbidden codes, and
- upon reception of said reset signal (LACForbid-denList_Reset), immediately starting said location update procedure and removing said Location Area Code from the list of forbidden codes, if the Location Area Code or LAC of the cell broadcasting said signal is included in the list of forbidden codes.

11. A user terminal (UE) for use in the network of claim 8 or claim 9, said user terminal (UE) configured for:
- upon reception of said start signal (CellRegistra-tion_Start) and if the cell broadcasting said signal is not included in the list of forbidden cells, performing the registration procedure with said cell (C),
- upon reception of said reset signal (CellForbid-denList_Reset) and if the cell broadcasting said signal is included in the list of forbidden cells, performing the registration procedure with said cell (C) and removing said cell from the list of forbidden cells, by performing said registration procedure with the cell (C) with the steps of:
- sending (2021) to said cell (C) a signal requesting a registration with the cell including an identifier thereof (104),
- upon receiving (2023-2025) from said cell (C) a signal confirming registration with the cell or refusal of registration with the cell, recording the identifier of said cell as an admitted cell (102) or adding said cell to said cell of forbidden cells, respectively.

12. The user terminal of claim 11, configured for sending to said cell (C), together with said identifier thereof (104), the results of radiometric measurements on the cell (C).

13. A computer program product loadable in the memory of at least one electronic computer and including software code portions for performing the method of any of claims 1 to 7.
